# EUROPEAN PATENT APPLICATION

(11) **EP 2 204 956 A1**
(43) Date of publication of application: **07.07.2010**
(21) Application number: 08022544.4
(22) Date of filing: 31.12.2008
(51) Int. Cl.: H04L 12/58

(54) **Mobile communication device**

(71) Applicant: Vodafone Holding GmbH, 40213 Düsseldorf (DE)
(72) Inventor: Lamberts, Harald, 40213 Düsseldorf (DE)
(74) Representative: Jostarndt, Hans-Dieter

(57) **Abstract**

The invention relates to a method for handling communication, wherein the method comprises the following steps:
evaluating, if a message language setting for a receiver and/or sender of the communication exists and handling the communication with regard to the language setting.

The invention furthermore relates to a mobile communication device for carrying out the method.

## Description

### Technical Field

The present invention is related to a mobile communication device. In particular, the present invention is related to a mobile communication device according to claim 1. The present invention is also related to a server and a system for integrating the mobile communication device.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can link a specific information item within a certain context of other kinds of information.

Several attempts have been made to help the user to organize communication items in a more efficient way.

When today a mobile telephone is released on the market its graphical user interface i.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favourite band starts playing. During holidays a personal blog may be the most frequently accessed service.

### Brief description of the invention

The present invention proposes a concept for associating information items with activations to emphasise the context of each communication item. It is an advantage of the present invention to provide additional contextual information to each information item. Providing contextual information is a very efficient way to support the memory of the user helping him to find and organise information items.

The invention comprises a method for handling communication, wherein the method comprises evaluating, if a message language setting for a receiver and/or sender of the communication exists and handling the communication with regard to the language setting.

According to an embodiment of the invention a stored language setting used.

According to a further embodiment of the invention the language setting is evaluated based on a probability analysis.

According to a further embodiment of the invention additional information about the receiver of the communication is utilized.

Further implementation of the invention proposes additional information about the sender of the communication is utilized.

According to a further implementation of the invention additional information about the sender of the communication is utilized.

According to an embodiment of the invention a user of a mobile communication device is enabled to utilize the method.

According to a further implementation of the invention a mobile user equipment enables the user to carry out the method according to any of the preceding claims.

The invention furthermore includes a mobile communication device comprising a radio interface, an input unit, a display and a processing means (201) wherein the processing means is arranged to control the communication device and wherein the processing means (201) is capable of carrying out the method described this application.

According to a further aspect the invention suggests a mobile communication device comprising a radio interface, an input unit, a display, and a processing means, wherein the processing means is arranged to receive a communication item, to associate the communication item with a graphical element and to control the display such that a context menu displayed on the display. The processing means places the graphical element on the context menu to allow a user a selection of one or more graphical elements displayed within the context menu.

The invention further more relates to a mobile communication device with processing means, which are capable of carrying out methods and/or procedures described within the context of the current application.

Further features and advantages will become apparent when reading the detailed description appended with drawings.

### Short description of the drawings

In the drawing exemplary embodiments of the invention are illustrated. It shows:
- Figure 1: a top view of the mobile communication device according to the invention;
- Figure 2: a schematic block diagram of the communication device;

Similar or identical features and elements are labeled with the same reference numbers in the drawings.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

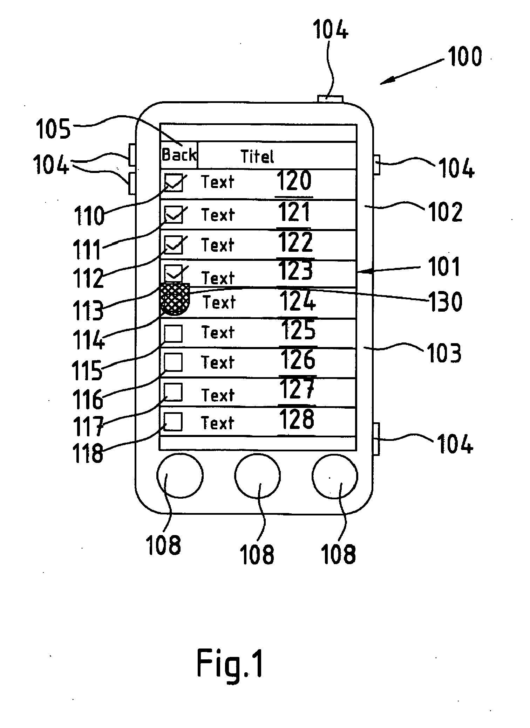

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below. Figure 1 shows a mobile communication device 100 according to the present invention. For example the mobile communication device is a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays a selection menu, wherein the selection menu contains a plurality of graphical elements 120; 121; 122; 123; 124; 125; 126; 127; 128. The graphical elements 120; 121; 122; 123; 124; 125; 126; 127; 128 comprise at least one part 110, 111, 112, 113, 114, 115, 116, 117, 118, which is capable of indicating a selection of the graphical element 120, 121, 122; 123; 124; 125; 126; 127; 128. The part 110, 111, 112, 113, 114, 115, 116, 117, 118 is for example an icon.

Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

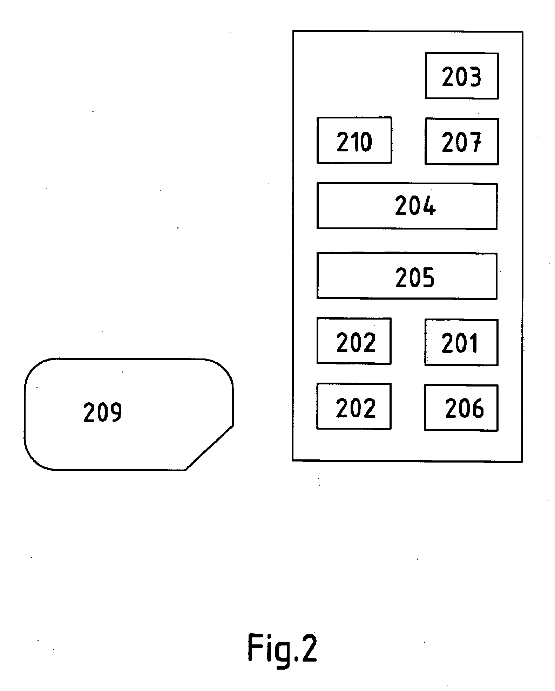

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the location of the mobile terminal 200. In the memory 202 maps are stored such that the communication device 100 can indicate the present location₋of the device of the screen 101. The functionality of the GPS module 210 provides the opportunity to support the user with additional contextual information related to the received communication items as will be described in the following in connection with figures 3a to 3d showing different kinds of views or representations of the communication items 107 on the screen 101. The main processor 210 allows to analyse communication by appropriate means, for example with analysation methods as Fourier transformation or wavelet transformation and/or with regard to stored dictionaries for at least two languages.

The present invention enables a user to communicate more efficient and to handle communication in a time and resource efficient manner.

According to an embodiment of the invention, the user is enabled to make a selection about the language settings.

Since the user makes a selection, features are implemented to inform him about the selection and to ensure, that an activation is carried out in the case, that the selection is maintained.

The invention thus implements a high security against undesired, incidentally occurring activations in combinations with a quick selection and activation of desired actions.

### List of reference numerals

- 100: communication device
- 101: screen
- 102: top surface
- 103: housing
- 104: buttons
- 105: command bar
- 108: hard key
- 110: part of a graphical element
- 111: part of a graphical element
- 112: part of a graphical element
- 113: part of a graphical element
- 114: part of a graphical element
- 115: part of a graphical element
- 116: part of a graphical element
- 117: part of a graphical element
- 118: part of a graphical element
- 120: graphical element
- 121: graphical element
- 122: graphical element
- 123: graphical element
- 124: graphical element
- 125: graphical element
- 126: graphical element
- 127: graphical element
- 128: graphical element
- 130: marked area
- 201: main processor
- 202: memory
- 203: radio interface
- 204: LCD display
- 205: input unit
- 206: microphone
- 207: loud speaker
- 208: card reader
- 209: SIM card
- 210: GPS module

## Claims

1. Method for handling communication, wherein the method comprises the following steps:
evaluating, if a message language setting for a receiver and/or sender of the communication exists and handling the communication with regard to the language setting.

2. The method according to claim 1, **characterized in that** a stored language setting used.

3. The method according to claim 1 or 2, wherein the language setting is evaluated based on a probability analysis.

4. The method according to claim 3, wherein additional information about the receiver of the communication is utilized for the probability analysis.

5. According to claim 3 or wherein additional information about the sender of the communication is utilized.

6. The method according to any of the preceding claims, **characterized in that** a user of a mobile communication device is enabled to utilize the method.

7. The method according to claim 6, **characterized in that** a mobile user equipment enables the user to carry out the method according to any of the preceding claims.

8. Mobile communication device comprising a radio interface (203), an input unit (205), a display (101, 204), and a processing means (201) wherein the processing means is arranged to control the communication device and wherein the processing means (201) is capable of carrying out the method according to any of the preceding claims.

9. Communication system, capable of handling communication for a plurality of communication devices, **characterized in that** it contains a data storage for storing information about language settings of receivers and/or senders of communication.
